# EUROPEAN PATENT SPECIFICATION

(11) **EP 1 981 682 B1**
(45) Date of publication and mention of the grant of the patent: **14.03.2012**
(21) Application number: 06704434.7
(22) Date of filing: 31.01.2006
(51) Int. Cl.: B23K 35/28, B23K 35/02, C23C 26/02, B23K 35/365

(54) **A PROCESS FOR MAKING A HEAT EXCHANGER**
VERFAHREN ZUR HERSTELLUNG EINES WÄRMETAUSCHERS
PROCEDE DE FABRICATION D'UN ECHANGEUR THERMIQUE

(43) Date of publication of application: 22.10.2008
(73) Proprietor: Norsk Hydro ASA, 0240 Oslo (NO)
(72) Inventor: AURAN, Lars, 6600 Sunndalsora (NO); NORDLIEN, Jan Halvor, 5541 Kolnes (NO); LEWIN, Carl, 4250 Kopervik (NO); NIELSEN, Henrik, 6360 Tinglev (DK)
(74) Representative: Hofseth, Svein
(86) International application number: PCT/EP2006/000806
(87) International publication number: WO 2007/087822

(56) References cited:
- EP-A1- 0 327 245
- EP-A2- 1 475 598
- WO-A-94/23082
- US-A- 4 901 908
- US-A- 5 464 146
- US-B1- 6 234 377

## Description

The invention relates to a process for making a heat exchanger comprising extruding a number of aluminium heat exchanging tubes, connecting the end portions of the heat exchanger tubes with connection elements, and optionally applying fins to the outer surface of the heat exchanging tubes, in which prior to the assembling of the heat exchanger the tubes are provided with a Si-containing coating, and after assembling the different element are brazed together.

Such a heat exchanger utilising Si containing braze coatings is generally known and described e.g. in US 4 981 526, US 5 100 048, US 6 234 377.

Further, US5464146 discloses a process for brazing a heat exchanger comprising extruded heat exchanging tubes, in which prior to the assembling of the heat exchanger the tubes are provided with a Si-containing coating. The heat exchanging tubes are made of an aluminium alloy AA3003 containing Mn: 0.15-0.8%, Si: <0,6%, Fe: <0.7%, Cu:0.1-0.3%, Mg: 0.15-0.8%, Cr:<0.2%, optional 0.05% Ni, balance being aluminium.

Such heat exchangers are designed to be used in mobile equipment such as cars and are therefore very susceptible to corrosion. The corrosion takes place on the parts of the heat exchanger with the lowest corrosion potential, or the parts which are less noble than the other parts of the heat exchanger and can lead to premature failure of the heat exchanger as a result of leakage.

It is an object of the invention to provide a process as described below for making a heat exchanger in which these problems have been avoided.

This object is obtained in that heat exchanging tubes are made of an aluminium alloy containing 0,45 - 1,40 % by weight Mn
0,00 - 0,20 % by weight Si
0,00 - 0,30 % by weight Fe
0,00 - 0,45 % by weight Cu
0,00 - 0,05 % by weight Mg
0,00 - 0,30 % by weight Cr

During brazing various elements will diffuse from the (molten) clad into the core and vice versa, resulting in a diffusion zone between the clad and the core. Silicon is one of the main elements that diffuse fast, and it diffuses from the (molten) clad into the core. Silicon lowers the amount of dissolved manganese by formation of α-AlMnSi precipitates. This lowers the manganese solid solution concentration in the diffusion zone compared to the core. The corrosion potential of aluminium is largely determined by the elements in solid solution. As manganese in solid solution increases the corrosion potential and hence makes the material more noble, the diffusion zone will have a manganese solid solution concentration gradient with a lower corrosion potential than the core- As a consequence the corrosion form will shift from pitting corrosion to preferential lateral corrosion, thereby improving the durability of the brazing sheet substantially.

The amount of Mn in solid solution is at least 0,4 % by weight.

By ensuring such an amount of Mn in solid solution, the brazing process will through the diffusion of Si and precipitation of Mn containing particles in the diffusion zone, provide the required corrosion potential difference between the near surface layer and the underlying material.

Other advantages and characteristics of the invention will become clear from the following description, in which reference is made to the annexed drawing showing a heat exchanger as an example of a product to be made with the process according to the invention.

Brazing is a way of joining two pieces of metal or metallic alloys. The metal components are bonded with a material known as a brazing filler metal. An important characteristic of the filler metal is that it has a melting point lower than that of the metals being jointed. In work pieces, an alloy (e.g., an aluminium silicon alloy) is commonly positioned between the surfaces to be joined and the work pieces are heated to a temperature which milts the alloy but not the underlying work piece. Upon cooling, the alloy solidifies as a joint between the work pieces. The alloy is typically introduced onto the surfaces of stock by cladding thereto in a roll bonding operation.

Since many parts can be brazed simultaneously, this brazing method is established as an industrial method of manufacturing various products including a heat exchanger core.

It is known in the art to use aluminium alloy brazing sheet for use, for example, in heat exchangers, oil coolers, inter coolers, evaporators or condensers of automobiles or other vehicles or applications using heat exchangers. Conventionally, these assemblies are manufactured from brazing sheets for brazing, using Al-Mn based aluminium alloys or Al-Mn-Si based aluminium alloys as a core material and Al-Si based aluminium alloys, typically of the AA4xxx-series alloys, as a clad brazing filler material.

Conventionally, brazing of aluminium alloy assembly articles are carried out by holding the temperature near 600 degree °C thereby exceeding the melting point (liquidus temperature) of the brazing filler metal. Controlled Atmosphere Brazing (CAB) and Vacuum Brazing are the two main processes used for industrial scale aluminium brazing with industrial vacuum brazing having been used since the 1950's. CAB became popular in the early 1980's after the introduction of the potassium fluoroaluminate complexes used to break the oxide.

Traditionally the header and the tube or the header and the fin contain the filler material necessary to ensure the joint formation during brazing. Typical heat exchanger core assembly combinations are:
1. Clad fin stock material/welded tube stock material/welded clad header stock material.
2. Clad fin stock material/extruded tube material/welded clad header stock material.
3. Unclad fin stock material/welded clad tube stock material/welded clad header stock material

The so-called Long Life brazing sheet alloys which shows excellent corrosion resistance was originally developed in the late 80s. The improved corrosion resistance is essentially based on utilizing the brazing cycle to form a sacrificial layer. The concept of the sacrificial layer has been described in EP-A-0326337 and EP 0 327 245. Prior to brazing, the sheet consists of an AA3xxx (Mn containing) core alloy and a clad with a 4xxx (high Si) alloy. During brazing various elements will diffuse from the (molten) clad into the core and vice versa, resulting in a diffusion zone between the clad and the core. Silicon is one of the main elements that diffuses fast, and it diffuses from the (molten) clad into the core. Silicon lowers the amount of dissolved manganese by formation of α-AlMnSi precipitates. This lowers the manganese solid solution concentration in the diffusion zone compared to the underlying core. The corrosion potential of aluminium is largely determined by the elements in solid solution. As manganese in solid solution increases the corrosion potential and hence makes the material more noble, the diffusion zone will have a manganese solid solution concentration gradient with a lower corrosion potential than the core. As a consequence the corrosion form will shift from pitting corrosion to preferential lateral corrosion, thereby improving the durability of the brazing sheet substantially. The thickness of the diffusion zone is typically around 40 to 80 µm. The key issue in Long Life sheet alloys is to keep the core manganese content in solid solution to the extent possible during processing. This is primarily achieved by omitting the homogenisation step after casting. Manganese easily supersaturates and a homogenisation step will significantly reduce the solid solution level of Mn.

However, in cases where added strength and mechanical stability at elevated temperature is required, some type of high temperature heat treatment before extrusion is necessary. Therefore, in these cases a compromise between strength and corrosion resistance must be made dependent on type of application.

When using extruded tube alloys in the heat exchanger the situation up to now has typically been to use the extruded tube in combination with clad fin stock material together with various solutions for the header (welded clad header stock material, extruded tube with a shims insert etc). As no diffusion gradient has been formed up to now during brazing for lack of a Si source at the surface of the extruded tube. The focus has therefore been to create long life alloys by reducing the susceptibility to pitting corrosion of the bare tube alloys itself and improving the galvanic coupling to the fin and header material.

From a cost point of view it has up un till now not been feasible on a mass production scale to produce extruded tube alloys with a clad layer or filler material coating acting in the same manner as the clad layer seen on clad sheet heat exchanger alloys. Thus, in the case of extruded aluminium tube alloys for brazed aluminium components, no focus have been given to the formation of a band of precipitates, up until now.

Recently flux and Si containing organic coatings have been developed, thus making it possible to apply the flux and Si providing coating by means of a coating process, which is technically simple. The Si providing part of the braze coating can be any type of Al-Si powder, Si powder or reactive salt in the form of K2SiF6. If reactive K2SiF6 salt is used, this salt will provide both the Si and the flux formation required to ensure proper filler formation. If on the other hand other Si sources are used an additional flux is required in the coating as well, in order to break the oxide. The type of brazing flux is not a limiting factor in this process, as any type of so called non-corrosive flux or non-corrosive reactive flux can be used.

The coating can be applied by different techniques, such as by means of spray coating, dip coating roll coating, roll transfer printing pad printing or screenprinting techniques. In order to ensure good brazeability of the brazing flux coated components, it is important to ensure adequate removal of the binder prior to the brazing. Normally the organic resin(s) used in the brazing flux coatings has a composition, which volatilises in the range of 200-450°C and most commonly in the range of 320-450 °C, This kind of coating will during brazing ensure that proper braze joint formation can take place, between e.g., coated extruded tube and unclad fin material. As a consequence this type of coating is currently being applied on extruded tube material on a mass production scale.

In order to utilise the formation mechanism of band of precipitates seen on brazing sheet when using Si containing coatings, it means that extruded tube alloys with a high Mn content should be applied.

Cr added to Mn containing alloys is found to promote a fine dispersion of Mn,Cr-containing particles. Addition of Cr to the bulk alloys would therefore also be beneficial.

Thus, in order to produce a band of precipitates on extruded tube alloys the following conditions must be met with respect to the alloy composition.

| Element | Min % | Max % |
|---|---|---|
| Mn | 0.5 | 1.4 |
| Si | - | 0,5 |
| Fe | - | 0.25 |
| Cu | - | 0.4 |
| Cr | | 0.3 |
| Mg | - | 0.05 |

The Si load in the braze coating applied on the extruded tubes needs to be > 2g/m2 in order to obtain both a good joint formation and a good ingress Si diffusion.

In order to form band of precipitates in the surface region of the braze coated extruded tube(s) during brazing, the Mn solid solution level prior to brazing needs to be as high as possible and >= 0.4 wt%.

At the same time as it is important to keep the solid solution Mn level as high as possible, the Si content in the aluminium alloy needs to be adjusted according to the overall Mn content. Increasing the Si content in the alloy improves the elevated temperature stability which is important with respect to heat exchanger applications. However, increasing the Si content in the extruded core alloy results in formation of α-AlMnSi precipitates thereby reducing the Mn solid solution level below the preferable lever.

The patent covers alloys with different strength levels as reflected in the chemistries of claims 6 to 9. Cr is added for increased temperature stability. Cu is added in some cases to provide electrochemical compatibility with other members of the brazed component. Mg is kept low to facilitate controlled Atmosphere Brazing (CAB). Fe is kept low to improve the corrosion resistance of the alloys.

For multi port extruded tubes, the Si load must at the same time be < 8 g/m2 in order to avoid burn through.

For extruded tubes used for manifold the Si load must be > 4 g/m2 and < 25 g/m2

Utilizing the formation of a dense band of precipitates on extruded tube alloys during brazing of aluminium components means that for the first time long life tube properties can be achieved in the same manner for extruded tube products as for heat exchanger sheet materials.

The improved corrosion performance of the brazed aluminium component can be obtained with a larger degree of freedom on alloy combination than what is currently seen today when using brazed aluminium components containing extruded tube material members.

Some of the advantages are:
- Improved overall corrosion resistance of the brazed aluminium components
- More flexible designs in terms of alloys and geometry.
- Down gauging of critical parts (longer life time of extruded tubes)
- Cost reductions (more freedom in terms of alloy combinations)

All applications of brazed aluminium components where corrosion resistance is required of one of the components of the work piece.

## Claims

1. A process for making a heat exchanger comprising extruding a number of heat exchanging tubes, connecting the end portions of the heat exchanger tubes with connection elements, and optionally applying fins to the outer surface of the heat exchanging tubes, in which prior to the assembling of the heat exchanger the tubes are provided with a Si-containing coating, and after assembling the different element are brazed together, **characterized in that** heat exchanging tubes are made of an aluminium alloy containing:
0,45 - 1,40 % by weight Mn
where the amount of Mn in solid solution is at least 0,4 % by weight,
0,00 - 0,20 % by weight Si
0,00 - 0,30 % by weight Fe
0,00 - 0,45 % by weight Cu
0,00 - 0,05 % by weight Mg
0,00 - 0,30 % by weight Cr
the remainder aluminium and where unavoidable impurities is set to a maximum of 0,05 % by weight.

2. A process according to claim 1, **characterized in that** the Si-containing coating contains at least 2 g/m² Si.

3. A process according to anyone of the claims 1 - 2, **characterized in that** the Si-containing coating contains at most 25 g/m² Si.

4. A process according to anyone of the claims 1 - 3, **characterized in that** the Si-containing coating contains at least 4 g/m² Si and/or less than 8 g/m² Si.

5. A process according to anyone of the claims 1 - 4, **characterized in that** the aluminium alloy contains :
1,25 - 1,40 % by weight Mn
0,00 - 0,50 % by weight Si
0,00 - 0,25 % by weight Fe
0,00 - 0,30 % by weight Cu
0,00 - 0,05 % by weight Mg
0,00 - 0,30 % by weight Cr

6. A process according to anyone of the claims 1 - 4, **characterized in that** the aluminium alloy contains :
0,90 - 1,25 % by weight Mn
0,00 - 0,40 % by weight Si
0,00 - 0,25 % by weight Fe
0,00 - 0,30 % by weight Cu
0,00 - 0,05 % by weight Mg
0,00 - 0,25 % by weight Cr

7. A process according to anyone of the claims 1 - 4, **characterized in that** the aluminium alloy contains :
0,65 - 0,90 % by weight Mn
0,00 - 0,30 % by weight Si
0,00 - 0,25 % by weight Fe
0,00 - 0,35 % by weight Cu
0,00 - 0,05 % by weight Mg
0,00 - 0,15 % by weight Cr

8. A process according to anyone of the claims 1 - 4, **characterized in that** the aluminium alloy contains :
0,45 - 0,65 % by weight Mn
0,00 - 0,20 % by weight Si
0,00 - 0,25 % by weight Fe
0,00 - 0,45 % by weight Cu
0,00 - 0,05 % by weight Mg
0,00 - 0,10 % by weight Cr

## Patentansprüche

1. Prozess zur Herstellung eines Wärmetauschers umfassend: Strangpressen mehrerer Wärmetauscherrohre, Verbinden der Endstücken der Wärmetauscherrohre mit Verbindungselementen und optional Anbringen von Rippen an den Außenflächen der Wärmetauscherrohre; wobei vor dem Zusammensetzen des Wärmetauschers die Rohre mit einer Si-haltigen Beschichtung versehen und nach dem Zusammensetzen der verschiedenen Bauelemente miteinander verlötet sind, **dadurch gekennzeichnet, dass** die Wärmetauscherrohre aus einer Aluminiumlegierung hergestellt sind, die Folgendes enthält:
0,45 - 1,40 Gew.-% Mn
wobei die Menge von Mn in fester Lösung mindestens 0,4 Gew.-% beträgt,
0,00 - 0,20 Gew.-% Si
0,00 - 0,30 Gew.-% Fe
0,00 - 0,45 Gew.-% Cu
0,00 - 0,05 Gew.-% Mg
0,00 - 0,30 Gew.-% Cr
übriges Aluminium und dabei unvermeidbare Verunreinigungen sind auf ein Maximum von 0,05 Gew.-% festgelegt.

2. Prozess nach Anspruch 1, **dadurch gekennzeichnet, dass** die Si-haltige Beschichtung mindestens 2 g/m² Si enthält.

3. Prozess nach einem der Ansprüche 1 bis 2, **dadurch gekennzeichnet, dass** die Si-haltige Beschichtung höchstens 25 g/m² Si enthält.

4. Prozess nach einem der Ansprüche 1 bis 3, **dadurch gekennzeichnet, dass** die Si-haltige Beschichtung mindestens 4 g/m² Si und/oder weniger als 8 g/m² Si enthält.

5. Prozess nach einem der Ansprüche 1 bis 4, **dadurch gekennzeichnet, dass** die Aluminiumlegierung Folgendes enthält:
1,25 - 1,40 Gew.-% Mn
0,00 - 0,50 Gew.-% Si
0,00 - 0,25 Gew.-% Fe
0,00 - 0,30 Gew.-% Cu
0,00 - 0,05 Gew.-% Mg
0,00 - 0,30 Gew.-% Cr

6. Prozess nach einem der Ansprüche 1 bis 4, **dadurch gekennzeichnet, dass** die Aluminiumlegierung Folgendes enthält:
0,90 - 1,25 Gew.-% Mn
0,00 - 0,40 Gew.-% Si
0,00 - 0,25 Gew.-% Fe
0,00 - 0,30 Gew.-% Cu
0,00 - 0,05 Gew.-% Mg
0,00 - 0,25 Gew.-% Cr

7. Prozess nach einem der Ansprüche 1 bis 4, **dadurch gekennzeichnet, dass** die Aluminiumlegierung Folgendes enthält:
0,65 - 0,90 Gew.-% Mn
0,00 - 0,30 Gew.-% Si
0,00 - 0,25 Gew.-% Fe
0,00 - 0,35 Gew.-% Cu
0,00 - 0,05 Gew.-% Mg
0,00 - 0,15 Gew.-% Cr

8. Prozess nach einem der Ansprüche 1 bis 4, **dadurch gekennzeichnet, dass** die Aluminiumlegierung Folgendes enthält:
0,45 - 0,65 Gew.-% Mn
0,00 - 0,20 Gew.-% Si
0,00 - 0,25 Gew.-% Fe
0,00 - 0,45 Gew.-% Cu
0,00 - 0,05 Gew.-% Mg
0,00 - 0,10 Gew.-% Cr

## Revendications

1. Procédé de fabrication d'un échangeur thermique comprenant l'extrusion d'un certain nombre de tubes d'échange thermique, le raccordement des parties terminales des tubes de l'échangeur thermique avec des éléments de raccordement, et facultativement l'application d'ailettes sur la surface extérieure des tubes d'échange thermique, dans lequel avant l'assemblage de l'échangeur thermique, les tubes sont dotés d'un revêtement contenant du Si, et après l'assemblage, les différents éléments sont brasés ensemble, **caractérisé en ce que** les tubes d'échange thermique se composent d'un alliage d'aluminium comprenant :
de 0,45 à 1,40 % en poids de Mn,
la quantité de Mn dans la solution solide étant d'au moins 0,4 % en poids,
de 0,00 à 0,20 % en poids de Si
de 0,00 à 0,30 % en poids de Fe
de 0,00 à 0,45 % en poids de Cu
de 0,00 à 0,05 % en poids de Mg
de 0,00 à 0,30 % en poids de Cr
le reste se composant d'aluminium et les impuretés inévitables étant fixées à un maximum de 0,05 % en poids.

2. Procédé selon la revendication 1, **caractérisé en ce que** le revêtement contenant du Si comprend au moins 2 g/m² de Si.

3. Procédé selon l'une quelconque des revendications 1 à 2, **caractérisé en ce que** le revêtement contenant du Si comprend au maximum 25 g/m² de Si.

4. Procédé selon l'une quelconque des revendications 1 à 3, **caractérisé en ce que** le revêtement contenant du Si comprend au moins 4 g/m² de Si et/ou moins de 8 g/m² de Si.

5. Procédé selon l'une quelconque des revendications 1 à 4, **caractérisé en ce que** l'alliage d'aluminium comprend :
de 1,25 à 1,40 % en poids de Mn
de 0,00 à 0,50 % en poids de Si
de 0,00 à 0,25 % en poids de Fe
de 0,00 à 0,30 % en poids de Cu
de 0,00 à 0,05 % en poids de Mg
de 0,00 à 0,30 % en poids de Cr.

6. Procédé selon l'une quelconque des revendications 1 à 4, **caractérisé en ce que** l'alliage d'aluminium comprend :
de 0,90 à 1,25 % en poids de Mn
de 0,00 à 0,40 % en poids de Si
de 0,00 à 0,25 % en poids de Fe
de 0,00 à 0,30 % en poids de Cu
de 0,00 à 0,05 % en poids de Mg
de 0,00 à 0,25 % en poids de Cr.

7. Procédé selon l'une quelconque des revendications 1 à 4, **caractérisé en ce que** l'alliage d'aluminium comprend :
de 0,65 à 0,90 % en poids de Mn
de 0,00 à 0,30 % en poids de Si
de 0,00 à 0,25 % en poids de Fe
de 0,00 à 0,35 % en poids de Cu
de 0,00 à 0,05 % en poids de Mg
de 0,00 à 0,15 % en poids de Cr.

8. Procédé selon l'une quelconque des revendications 1 à 4, **caractérisé en ce que** l'alliage d'aluminium comprend :
de 0,45 à 0,65 % en poids de Mn
de 0,00 à 0,20 % en poids de Si
de 0,00 à 0,25 % en poids de Fe
de 0,00 à 0,45 % % en poids de Cu
de 0,00 à 0,05 % % en poids de Mg
de 0,00 à 0,10 % en poids de Cr.
